# NOUVEAU FASCICULE DE BREVET EUROPEEN

(11) **EP 0 873 395 B2**
(45) Date de publication et mention de la décision concernant l'opposition: **06.09.2006**
(45) Mention de la délivrance du brevet: 29.05.2002
(21) Numéro de dépôt: 96933587.6
(22) Date de dépôt: 25.10.1996
(51) Int. Cl.: C12C 7/28

(54) **DISPOSITIF POUR L'ELIMINATION DES COMPOSANTS VOLATILS NON DESIRES CONTENUS DANS UN MOUT DE BIERE**
GERÄT ZUR ENTFERNUNG UNERWÜNSCHTER, FLÜCHTIGER STOFFE AUS DER BIERWÜRZE
DEVICE FOR REMOVING UNWANTED VOLATILE COMPOUNDS FROM BEER WORT

(30) Priorité: 27.10.1995 FR 9512735
(43) Date de publication de la demande: 28.10.1998
(73) Titulaire: InBev S.A., 1000 Bruxelles (BE)
(72) Inventeur: SELDESLACHTS, Dirk, 3020 Winksele (BE)
(74) Mandataire: Bentz, Jean-Paul
(86) Numéro de dépôt international: PCT/IB1996/001155
(87) Numéro de publication internationale: WO 1997/015654

(56) Documents cités:
- EP-A- 0 227 420
- WO-A-95/26395
- DE-A- 3 126 714

## Description

L'invention concerne une nouvelle utilisation d'un procédé pour l'élimination des composants volatils non désirés contenus dans un moût de bière.

Dans l'industrie de la brasserie, la cuisson du moût est une opération complexe dont dépendent non seulement les qualités organoleptiques de la bière mais également sa stabilité, notamment la qualité et la stabilité de la mousse. Une bonne maîtrise de cette étape est donc nécessaire, à la fois pour obtenir une bière satisfaisante vis-à-vis des exigences de qualité, mais également en raison du fait que cette étape consomme la plus grande partie de l'énergie utilisée dans la préparation de la bière.

Parmi les nombreuses transformations s'opérant pendant la cuisson du moût, l'une d'entre elles consiste à éliminer du moût les composants aromatiques volatils non désirés, en particulier les composants soufrés, tels que le DMS (sulfure de diméthyle) et les huiles essentielles provenant du malt et du houblon.

Généralement, les processus classiques de cuisson du moût éliminent les composants aromatiques non désirés en faisant subir au moût une forte évaporation, conduisant inévitablement à l'utilisation d'une importante quantité d'énergie.

Des recherches ont donc été entreprises pour diminuer ou récupérer l'énergie utilisée dans l'évaporation du moût. Les solutions proposées n'ont cependant permis jusqu'à présent qu'une récupération partielle de l'énergie consommée. De plus, dans la plupart des cas, les procédés de récupération d'énergie nécessitent d'apporter des transformations au site de production et conduisent alors à des investissements importants.

Pour éviter ces problèmes, on a alors essayé de développer des procédés de cuisson du moût différents, permettant de n'utiliser qu'une faible évaporation et par là même une faible quantité d'énergie.

Un tel procédé a notamment été proposé, dans lequel le moût est chauffé, sans évaporation notable, de manière à former un précipité chaud. Ce précipité chaud est ensuite séparé, au cours de la clarification du moût, en même temps que certains composants solides non désirés.

Dans ce procédé, les composants volatils non désirés sont éliminés du moût en réalisant un contact intensif entre le moût chauffé et un courant de gaz inerte ou de vapeur.

Lors de ce contact, les composants volatils non désirés sont transférés du moût vers le courant de gaz inerte ou de vapeur et peuvent être ensuite évacués.

Ce procédé, s'il permet effectivement de réduire dans une large mesure la quantité d'énergie nécessaire, se heurte cependant à la difficulté que les colonnes de désorption utilisées pour réaliser le passage des composants volatils du moût vers la phase gazeuse ne permettent d'obtenir qu'un rendement insuffisant.

Le WO 95/26395 décrit un procédé d'ébullition continue d'un moût de bière. Ce procédé comprend les étapes qui consistent à chauffer le moût entre 80 et 110°C, à introduire le moût chauffé dans un réacteur à écoulement idéal, de préférence une colonne de maintien à disques rotatifs, et à traiter le moût venant de ce réacteur avec de la vapeur à contre-courant dans une colonne de dégazage ou de stripage (stripping).

La colonne de stripage peut être une colonne à plateaux comportant au moins cinq plateaux ou une colonne remplie de corps de gamissage, les corps de garnissage étant prévus sur une hauteur d'au moins deux mètres.

Dans l'exemple décrit, qui correspond à un équipement à l'échelle pilote, le moût chauffé à 103°C est introduit, à un débit de 1200l/h, dans un réacteur à disques rotatifs de capacité 6001, soit un temps de séjour moyen de 30 minutes. Il est précisé que la S-méthylméthionine (SMM) est transformée de façon satisfaisante en sulfure de diméthyle (DMS).

Le moût est ensuite envoyé à la partie supérieure d'une colonne à plateaux équipée de 12 plateaux et de tubulures de descente. La charge liquide de la colonne est d'environ 20 litres. De la vapeur d'eau saturée est introduite dans la partie inférieure de la colonne à raison d'un taux de 5%.

Les proportions annoncées de DMS dans le moût sont de 195 µg/l après le réacteur et de moins de 10 µg/l après dégazage, pour une teneur en DMS de la bière finale de 40 µg/l.

Il semblerait donc que près de 95% du DMS entrant dans la colonne de stripage est volatilisé par la vapeur, ce qui est excellent.

Le problème est de transposer ces essais à l'échelle industrielle. De façon plus précise, s'il faut une colonne de 12 plateaux pour un débit de 1200l/heure, quelles seraient les dimensions d'une colonne adaptée à un débit d'environ 40 m3/heure à 60 m3/heure courant en brasserie.

En outre, le document précité ne comporte aucune indication concernant les difficultés inhérentes à un traitement du moût dans une colonne de dégazage :
a) l'homme du métier connaît la tendance du moût au moussage, la mousse pouvant provenir soit d'un barbotage de la vapeur dans le moût, soit simplement de l'ébullition du moût.
b) l'homme du métier salt que le moût présente une certaine viscosité, ne coule pas comme un liquide et constitue une suspension instable. Les matières éventuellement décantées doivent être nettoyées efficacement et régulièrement, faute de quoi elles peuvent gêner le fonctionnement ultérieur de la colonne qu'elles obstruent partiellement, et constituer des impuretés capables de dégrader de façon importante les propriétés organoleptiques de la bière produite dans ces conditions.

Il apparaît clairement que la colonne à douze plateaux décrite dans le document précité n'est sans doute pas adaptée à assurer le stripage de moût de bière à l'échelle industrielle, à des conditions économiques acceptables concemant tant le coût que l'investissement que celui d'exploitation, de nettoyage et d'entretien.

En outre, une colonne de stripage remplie de corps de remplissage est citée comme théoriquement utilisable, mais le document précité ne donne aucune information à ce sujet autre que la hauteur minimale de 2 mètres du volume occupé par les corps de remplissage.

Le problème à la base de l'invention consiste donc à remédier aux inconvénients des dispositifs connus et de proposer une colonne de stripage capable d'effectuer de manière économique et fiable le dégazage d'un moût de bière avec un débit horaire de moût de niveau industriel, par exemple de quelques dizaines de m³/h, ce dégazage ayant un rendement prédéterminé suffisant pour permettre de supprimer pratiquement toute phase d'ébullition énergique du moût.
Le BE-A-1 002 680 décrit un procédé qui est énoncé dans le préambule de la nouvelle revendication 1.

Or, les premiers essais effectues par la demanderesse avec une colonne industrielle de stripage remplie de corps de gamissage, sans plateaux difficiles à nettoyer, ont conduit à un rendement d'élimination du DMS de l'ordre de 60 à 70%, rendement insuffisant ne permettant pas la suppression d'une phase d'ébullition énergique du moût.
Le but de la présente invention est de proposer une nouvelle utilisation de ce procédé.
Cette nouvelle utilisation est décrite dans la partie caractérisante de la nouvelle revendication 1.
D'autres caractéristiques de cette utilisation sont définies dans les revendications dépendantes.

La demanderesse a ainsi été conduite, en allant à l'encontre des idées reçues, à sélectionner un certain nombre de caractéristiques nécessaires pour obtenir un rendement d'élimination du DMS par stripage d'au moins 85%. Ces caractéristiques sont les suivantes :
1 - choisir une colonne verticale avec courant descendant du moût et courant ascendant de vapeur;
2 - séparer, sur la plaque supérieure, les moyens de passage de vapeur et les moyens de passage du moût, ce qui va dans le sens d'une diminution du temps de contact moût/vapeur dans la colonne;
3 - répartir de façon régulière et uniforme sur toute la surface transversale de la colonne le flux de moût et le flux de vapeur, ce qui diminue les vitesses, diminue également les temps de contact et donc les échanges de matière volatile entre moût et vapeur, et augmente les risques de décantation des matières insolubles en suspension dans le moût;
4 - utiliser comme moyens de répartition du moût des orifices ménagés dans l'épaisseur de la plaque supérieure, le nombre et le diamètre de ces orifices étant prédéterminés de façon à permettre le passage d'un débit prédéterminé de moût, compte-tenu d'une hauteur prédéterminée de moût au-dessus de la plaque, tout en interdisant le passage de la vapeur;
5- utiliser pour le passage de la vapeur des cheminées d'une hauteur prédéterminée suffisante pour empêcher tout passage par débordement de moût ou de mousse dans ces cheminées, ce qui mobilise une hauteur prédéterminée de la colonne;
6- utiliser un corps de remplissage de relativement grande dimension, et donc de faible rapport surface d'échange par unité de volume, ce qui diminue les échanges moût/vapeur, à savoir des anneaux de diamètre au moins égal à 3 à 4 cm;
7- utiliser une plaque support des corps de remplissage présentant des orifices dont la surface totale équivaut à 90 ou 100% de la surface transversale de la colonne, ce qui minimise le contact moût/vapeur;
8- répartir de façon régulière sur toute la surface transversale de la colonne les trous d'arrivée de vapeur, ce qui diminue toute composante horizontale éventuelle de l'écoulement de la vapeur facilitant le contact moût / vapeur.
9- supprimer les paniers qui, de façon classique, contiennent les corps de remplissage, et qui permettent de sortir très rapidement les corps de remplissage d'une colonne en vue du nettoyage de ces corps et de l'intérieur de la colonne. Cette suppression rend longue et fastidieuse, et donc utilisable uniquement à titre exceptionnel, une telle vidange de la colonne. Ceci veut dire que le fonctionnement de la colonne dépend uniquement de l'efficacité du nettoyage des corps de remplissage à l'intérieur de ladite colonne, alors que l'on a dit plus haut que le moût est une suspension instable qui risque de produire des matières décantées.

De façon tout à fait surprenante, la demanderesse a obtenu de manière fiable un rendement d'élimination du DMS de l'ordre de 85% pour un débit de moût de l'ordre de 40 m³/h et un débit de vapeur en poids de l'ordre de 0,5 à 1,5% du débit du moût.

Par ailleurs, la plupart des caractéristiques précitées facilitent le nettoyage de l'intérieur de la colonne de stripage, de sorte que cette colonne fonctionne de manière extrêmement fiable bien que le moût chaud constitue une suspension liquide dont la manipulation demande beaucoup de précautions. Le nettoyage in situ de l'intérieur de la colonne peut être réalisé de manière suffisamment efficace pour rendre totalement inutile et improbable une vidange de la colonne pour en extraire les corps de remplissage.

L'invention concerne l'utilisation d'un dispositif d'élimination des composants volatils non désirés contenus dans un moût de bière.

Le dispositif pour l'élimination des composants volatils non désirés contenus dans un moût de bière sel caractérise en ce qu'il comprend une colonne comprenant :
- des moyens de distribution uniforme du moût de bière à l'intérieur de ladite colonne et dans un premier sens;
- des moyens de distribution uniforme d'un courant de gaz consistant en un gaz inerte ou de la vapeur à l'intérieur de la colonne et dans un second sens, de préférence opposé audit premier sens; et
- des moyens d'augmentation de la surface de contact dudit moût à l'intérieur de ladite colonne avec ledit courant de gaz inerte ou de vapeur.

Selon l'invention les moyens de distribution uniforme du moût comprennent une plaque de distribution, le plan passant par ladite plaque de distribution étant sensiblement perpendiculaire à l'axe longitudinal de la colonne. La plaque de distribution est localisée du côté d'alimentation en moût de la colonne, au niveau de la partie supérieure de la colonne et comporte des premiers moyens d'écoulement uniforme du moût dans ledit premier sens, par exemple une pluralité d'orifices disposés sur la surface de la plaque de distribution et des seconds moyens de passage dudit courant de gaz inerte ou de vapeur dans ledit second sens.

Le nombre, les dimensions et la répartition des orifices sur la plaque de distribution ne sont pas critiques en eux-mêmes et doivent seulement permettre un écoulement uniforme du moût au travers de la plaque de distribution, en fonction notamment des débits de moût utilisés industriellement.

De préférence, les orifices sont conçus et disposés de telle sorte que le moût entrant dans la colonne ne passe pas tout de suite au travers de la plaque de distribution mais demeure pendant quelques secondes sur la plaque de distribution avant de s'écouler par les orifices.

De cette façon, un volume de moût, de préférence pratiquement constant, reste sur la plaque de distribution pendant toute la durée du traitement, afin de compenser les éventuelles variations du débit de moût entrant dans la colonne et améliorer encore l'uniformité de la distribution du moût à l'intérieur de la colonne.

Le volume de moût restant sur la plaque de distribution n'est pas critique en lui-même et dépend notamment des dimensions de la colonne, des débits choisis pour le traitement du moût.

, les seconds moyens de passage du courant de gaz inerte ou de vapeur consistent en des cheminées disposées sur la surface de la plaque de distrlbution.

Avantageusement, la hauteur des cheminées est choisie de telle sorte que le moût entrant dans la colonne reste sur la plaque de distribution avant de s'écoulerdefaçon uniforme parles orifices de la plaque de distribution, sans passer par les cheminées. En effet, un passage du moût directement par les cheminées provoque généralement un phénomène de moussage qui nuit au rendement de la colonne et qui doit par conséquent être évité.

L'homme du métier choisira des dimensions de cheminées adaptées et un débit du moût approprié pour que la hauteur du volume de moût restant sur la plaque de distribution soit toujours inférieure à la hauteur des cheminées et éviter ainsi tout passage du moût par les cheminées.

Selon l'invention, l'élimination des composants volatils du moût s'opère par transfert entre la phase liquide du moût et la phase gazeuse du courant de gaz inerte ou de vapeur. Selon l'invention, l'efficacité de ce transfert est améliorée en augmentant la surface de contact entre le moût et le courant de gaz inerte ou de vapeur.

la surface de contact est augmentée en utilisant des anneaux, localisés au-dessous desdits moyens de distribution uniforme du moût ces anneaux ayant un diamètre au moins égal à 3 à 4 cm.

Des anneaux de ce type utilisables dans le cadre de la présente invention sont notamment ceux commercialisés sous la dénomination Cascade® Mini Rings par la société Glitsch Inc., U.S.A.

les anneaux sont disposés sur une plaque de fond sensiblement perpendiculaire à l'axe longitudinal de la colonne et sont disposés sur celle-ci de façon aléatoire, formant ainsi un réseau diffus d'anneaux empilés.

Le moût circulant sur tes anneaux suit par conséquent un trajet plus ou moins aléatoire, passant d'un anneau à l'autre, par exemple par simple gravité, et les composants volatils sont transférés progressivement dans le courant de gaz inerte ou de vapeur circulant dans un sens de préférence opposé.

Selon une forme de réalisation préférée de la présente invention, la plaque de fond possède également des moyens d'augmentation de la surface de contact et-qui réduisent la résistance au passage du courant de gaz inerte ou de vapeur.

Selon une première forme de réalisation de l'invention, la plaque de fond est ondulée sur au moins une partie de sa surface et comporte des orifices sur sa surface. De préférence, les orifices disposés à la surface de la plaque de fond et les ondulations aboutissent à une surface libre d'environ 90 à environ 100 % de la surface de section de la colonne.

Selon une seconde forme de réalisation de l'invention, la plaque de fond est constituée d'un grillage ondulé.

Selon l'invention, le courant de gaz inerte ou de vapeur est alimenté de façon uniforme à l'intérieur de la colonne, à partir de la région d'évacuation du moût traité, dans la partie inférieure de la colonne.

Avantageusement, les moyens de distribution uniforme du courant de gaz Inerte ou de vapeur comprennent une conduite principale, éventuellement en communication avec des conduites secondaires, comportant une pluralité d'orifices disposés de façon régulière sur la majeure partie de la conduite principale et des conduites secondaires, pour permettre au courant de gaz inerte ou de vapeur d'être alimenté à l'intérieur de la colonne et sur pratiquement la totalité de la section de la colonne. Avantageusement, les moyens de distribution uniforme d'un courant de gaz inerte ou de vapeur sont disposés au niveau de la région d'évacuation du moût traité, de préférence au niveau de la partie inférieure de la colonne.

Avantageusement, les orifices sont dirigés vers le fond de la colonne, afin d'éviter que le moût n'entre dans la ou les conduites.

Selon une forme de réalisation préférée, le dispositif selon l'invention comprend des moyens d'évacuation et/ou de récupération du courant de gaz inerte ou de vapeur.

Selon une première forme de réalisation de l'invention, la colonne est munie à sa partie supérieure d'une ou plusieurs vannes libérant le courant de gaz inerte ou de vapeur vers l'extérieur.

Selon une autre forme de réalisation préférée de la présente invention, le courant de gaz inerte ou de vapeur est récupéré à l'aide de tout système connu, par exemple un ou plusieurs condenseurs lorsque de la vapeur d'eau est utilisée, reliés à la partie supérieure de la colonne par des moyens formant conduite.

La taille et les dimensions de la colonne et de ses différents éléments constitutifs ne sont pas critiques en eux-mêmes et peuvent être choisies en fonction notamment du site de production, des volumes de moût à traiter et de l'efficacité voulue d'élimination des composants volatils non désirés.

On veillera cependant à ce que l'agencement des différents éléments à l'intérieur de la colonne soit tel que les distances entre, par exemple, la sortie de la conduite d'alimentation en moût et la plaque de distribution du moût, la plaque de distribution du moût et le réseau diffus d'anneaux, la plaque de fond et un système de recueil du moût ne soient pas trop importantes, afin d'éviter la formation de mousse préjudiciable à un rendement optimum du dispositif selon l'invention.

De préférence, les distances ci-dessus ne seront pas supérieures à environ 0,5 m.

Selon une forme de réalisation préférée de la présente invention, des moyens sont prévus pour nettoyer l'intérieur de la colonne après plusieurs cycles de traitement, sans démontage de celle-ci. En effet, le dispositif selon l'invention comporte plusieurs entrées et sorties et un nettoyage réalisé seulement en introduisant dans le dispositif un liquide de nettoyage qui suit le parcours normal du moût n'est pas toujours suffisant. Des moyens de nettoyage supplémentaires sont donc prévus.

Avantageusement, ces moyens de nettoyage supplémentaires comprennent un ou plusieurs distributeurs d'un liquide lavant ou rinçant localisés dans différentes régions de la colonne.

Ainsi, on pourra prévoir de tels distributeurs notamment au niveau des moyens de distribution du moût, au niveau des moyens d'augmentation de la surface de contact du moût avec un courant de gaz inerte ou de vapeur, au niveau des moyens de distribution du courant de gaz inerte ou de vapeur, au niveau des moyens de recueil du moût traité.

Les distributeurs consistent par exemple en des produits appelées "boules de nettoyage" qui permettent de couvrir une zone déterminée avec un liquide de lavage ou de rinçage, par exemple de l'eau ou de la soude, arrivant par une tuyauterie.

Des boules de nettoyage utilisables dans le cadre de la présente invention sont par exemple celles commercialisées sous la dénomination "dispositif de nettoyage par pulvérisation" par la société Tuchenhagen, Allemagne.

Avantageusement, les distributeurs sont reliés à des systèmes extérieurs de commande et de contrôle connus en sol.

Avantageusement, les différents éléments du dispositif selon la présente invention, ainsi que les opération qu'ils effectuent, sont commandés, régulés et contrôlés par un système, de préférence extérieur.

Par exemple, la conduite d'alimentation en moût entrant dans la colonne comprend notamment un moyen de détection, par exemple une sonde infrarouge, détectant les transitions eau-moût. La pompe d'alimentation en moût est également contrôlée par une ou plusieurs vannes régulatrices. Les différentes vannes utilisées dans le dispositif selon l'invention consistent notamment en des électrovannes et/ou des vannes pneumatiques.

L'entrée et la sortie du système de chauffage sont également reliées à des sondes de température, une soupape de sécurité à la sortie du système permettant par ailleurs une évacuation de la chaleur en cas de besoin.

L'évacuation du moût traité est régulée par une pompe de sortie. De préférence, la pompe de sortie est réglée au même niveau que la pompe d'alimentation en moût pour maintenir un niveau constant de moût dans la partie inférieure de la colonne formant un tampon de moût.

Avantageusement, le dispositif selon l'invention comprend également des systèmes de détection du vide de la colonne, du niveau du moût dans la colonne, des systèmes de mesure du niveau de tampon de moût dans le fond de la colonne, des systèmes de mesure des différences de pression pour le remplissage de la colonne, ainsi que différentes vannes de sécurité, notamment vers l'atmosphère pour éviter les sous- et surpressions lors des phases de remplissage et de nettoyage.

Les différents systèmes de commande, de régulation et/ou de contrôle sont reliés à des organes de gestion électronique et/ou informatique connus en sol.

Le dispositif selon l'invention fonctionne aussi bien en mode atmosphérique, qu'en surpression ou sous vide léger.

Le procédé d'élimination des composants volatils contenus dans un moût de bière, sans évaporation notable, comprenant une première étape d'ébullition du moût, à une température variant entre environ 90°C et environ 150°C, suivie d'une seconde étape de séparation des composants volatils non désirés contenus dans le moût, se caractérise en ce que la seconde étape de séparation est réalisée dans un dispositif tel que décrit dans ce qui précède.

Selon l'invention, le procédé d'élimination des composants volatils selon l'invention fonctionne aussi bien à la pression atmosphérique qu'en sous- ou surpression.

Selon une première forme de mise en oeuvre du procédé, la pression interne de la colonne est légèrement diminuée, par exemple par une pompe à vide. Dans ce cas, la température du moût entrant dans la colonne en phase d'ébullition peut être portée à une température plus basse que la température d'ébullition du moût à pression atmosphérique. En effet, à chaque pression correspond une température d'ébullition différente, et un réglage approprié de la pression interne de la colonne conduisant à une sous-pression permet d'éliminer les composants volatils du moût en travaillant à une température d'entrée du moût plus basse que la température d'ébullition à pression atmosphérique.

En opérant ainsi, le préchauffage du moût entrant peut être supprimé.

A l'inverse, lorsque le moût entrant possède une température plus élevée que satempérature d'ébul-llition à pression atmosphérique, il est possible de régler la pression interne de la colonne, de façon à obtenir une surpression correspondant à la pression à la température du moût entrant, et d'éliminer les composants volatils sans être obligé de refroidir le moût entrant.

L'invention a pour objet l'utilisation, pour l'élimination des composants volatils non désirés contenus dans un moût de bière, d'un dispositif tel que décrit dans ce qui précède.

Des avantages et caractéristiques supplémentaires de la présente invention apparaîtront encore à la lumière de la description plus détaillée qui suit d'un exemple de réalisation de l'invention, donné à titre purement illustratif et non limitatif, ainsi qu'aux figures qui s'y rapportent et dans lesquelles :
- la figure 1 représente une vue schématique d'un mode de réalisation du dispositif d'élimination des composants volatils de la présente invention;
- la figure 2 représente une vue schématique de face et en perspective d'un mode de réalisation de la plaque de distribution du moût;
- la figure 3 représente une vue schématique de dessus d'un mode de réalisation de la plaque de fond;
- la figure 4 représente une vue schématique en coupe du mode de réalisation de la plaque de fond de la figure 3, selon la ligne A-A'; et
- la figure 5 représente une vue schématique de dessous d'un mode de réalisation du système de distribution du courant de gaz inerte ou de vapeur.

Dans les figures, les mêmes références numériques correspondent aux mêmes éléments.

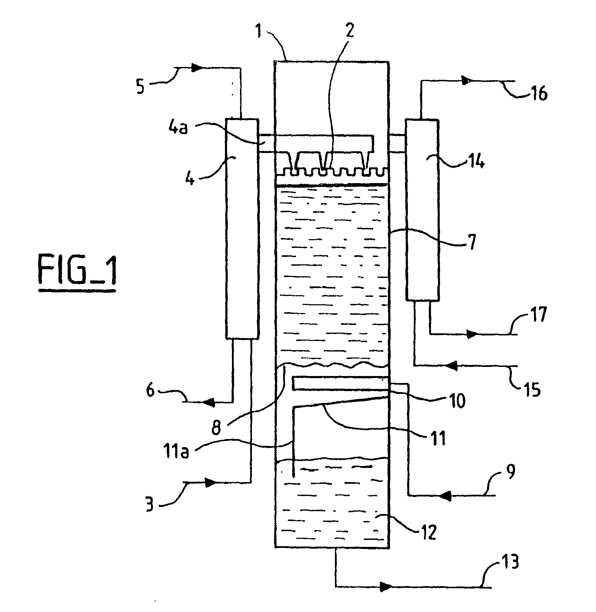

En se référant maintenant à la figure 1 dans laquelle les flèches indiquent les différents sens de circulation des fluides ou gaz utilisés, le dispositif d'élimination des composants volatils contenus dans un moût de bière comprend une colonne de désorption 1 muni à sa partie supérieure d'un système de distribution uniforme 2 du moût.

L'alimentation de la colonne 1 est effectuée par une conduite 3. Le moût, avant d'arriver dans la colonne 1, passe éventuellement dans un système de chauffage 4. Le système de chauffage 4 est de type connu en soi et fonctionne de façon classique en élevant la température du moût par échange de chaleur avec de la vapeur d'eau arrivant par la conduite 5, le condensat étant évacué ensuite par la conduite 6.

Une fois chauffé, le moût passe parla conduite 4a et est déversé dans la colonne 1 de façon uniforme grâce au distributeur de moût 2. Le moût s'écoule alors par gravité à l'intérieur de la région de remplissage 7 de la colonne 1. Dans cette région 7 sont empilés des anneaux (non représentés sur la figure) augmentant la surface de contact entre le moût et le courant de gaz inerte ou de vapeur. Les anneaux reposent sur une plaque de fond 8 qui sera décrite plus en détail plus loin.

De la vapeur d'eau ou un gaz inerte tel que de l'azote sont fournis par la conduite 9 et sont envoyés à l'intérieur de la colonne 1 par l'intermédiaire d'un système de distribution uniforme 10.

Dans la forme de réalisation préférée de la figure 1, il apparaît que le sens de distribution du moût de bière est descendant alors que le sens de distribution du courant de gaz inerte ou de vapeur est ascendant.

A la fin de son trajet dans la région de remplissage 7, le moût tombe sur un système de recueil consistant en une surface à plan incliné 11 permettant l'écoulement, par l'intermédiaire d'un versoir 11a, du moût dans la partie inférieure 12 de la colonne 1, correspondant au fond de ladite colonne, sans qu'une quantité substantielle de mousse ne se forme. A la place de la surface à plan incliné 11 unique décrite ci-dessus, plusieurs surfaces à plan incliné peuvent également être prévues, les versoirs respectifs des différentes surfaces à plan incliné guidant l'écoulement du moût traité vers une région commune. Le moût recueilli, débarrassé des composants volatils forme dans le fond de la colonne une zone tampon qui est ensuite évacuée par l'intermédiaire de la conduite 13 vers des réservoirs de refroidissement et/ou de fermentation.

Il va de soi que la surface à plan incliné 11 ne constitue qu'un mode de réalisation préféré du système de recueil du moût traité. Tout autre système permettant d'éviter une formation importante de mousse peut être utilisé à la place de la surface à plan incliné 11.

Un condenseur 14 est prévu pour récupérer la vapeur utilisée pour le traitement du moût et les composants volatils éliminés. Le condenseur 14 reçoit de l'eau de refroidissement, par exemple de l'eau de puits, par la conduite 15. L'eau de refroidissement, après avoir circulé dans le condenseur 14, est évacuée par la conduite 16 et le condensat obtenu contenant les composants volatils est évacué par la conduite 17 vers l'égout ou tout autre dispositif de stockage ou de traitement ultérieur.

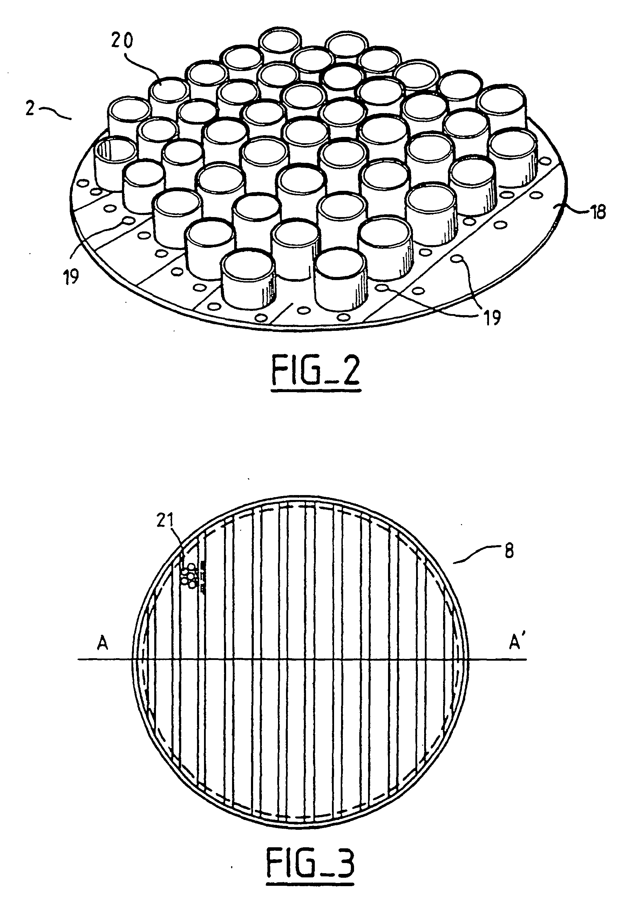

En se référant maintenant à la figure 2, il apparaît que la plaque de distribution uniforme 2 du moût comprend un fond métallique 18 à la surface duquel sont prévus de façon régulière des orifices 19 et des cheminées 20.

Le nombre et les dimensions des orifices, ainsi que le débit de moût sont choisis de façon qu'un certain volume de moût, pratiquement constant pendant toute la durée du traitement, reste sur le fond 18, la hauteur des cheminées 20 étant telle quelle empêche le volume de moût restant sur le fond 18 de passer par les cheminées 20.

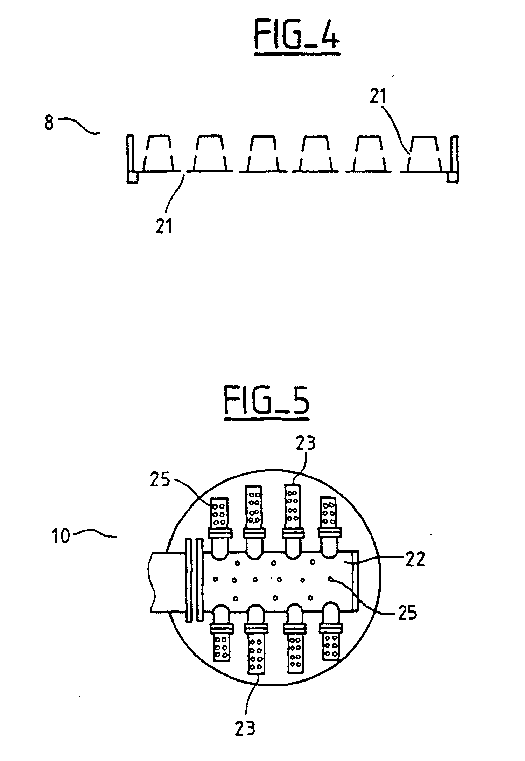

Sur les figures 3 et 4 est représenté un mode de réalisation de la plaque de fond 8. La plaque de fond 8 est constituée d'une plaque ondulée, percée d'orifices 21 faisant communiquer la région de remplissage avec le fond de la colonne. Sur la figure 3, une partie seulement des orifices 21 est représentée, mais il doit être compris que les orifices 21 sont disposés sur toute la surface de la plaque de fond 8.

En se référant maintenant à la figure 5, il apparaît que le distributeur uniforme 10 du courant de gaz inerte ou de vapeur comprend une conduite principale 22 communiquant avec plusieurs conduites secondaires 23. Les faces inférieures des conduites 22 et 23 sont percées d'orifices 25 permettant une répartition uniforme de la vapeur ou du gaz inerte à l'intérieur de la colonne. Le gaz inerte ou la vapeur sort donc en étant expulsé d'abord vers le fond de la colonne, puis prend un trajet ascendant vers la partie supérieure de la colonne.

De préférence, le débit de vapeur d'eau ou de gaz inerte est d'environ 0,5 % à environ 3 % en poids du débit de moût.

Un exemple d'élimination des composants volatils non désirés contenus dans un moût de bière est donné ci-après.

### Exemple.

Une colonne de désorption d'un diamètre de 0.95 m et d'une hauteur de 2,20 m est préchauffée pour éviter l'apparition de condensation au début ou traitement et également pour pouvoir mesurer la pression interne réelle à l'intérieur de la colonne. Pour ce faire, de l'eau à une température de 70-85°C est introduite et est chauffée à 95°C pendant 5 minutes.

De la vapeur d'eau à un débit de 900 kg/h est ensuite injectée dans la colonne pendant 5 minutes et le surplus de vapeur est condensé par le condenseur alimenté avec de l'eau froide.

La pression interne mesurée correspond à la pression atmosphérique et sera utilisée pour évaluer la température d'ébullition que le moût à traiter doit avoir à son entrée dans la colonne.

Avant l'introduction du moût, la colonne est vidée pour éviter une dilution du moût pendant la période de démarrage du traitement.

Un échantillon de 420 hl de moût de bière de type Pils est alors alimenté à l'intérieur de la colonne, à un débit de 400 hl/h. Le moût entrant dans la colonne est au préalable chauffé à la température déterminée en fonction de la pression interne de la colonne, soit 100.5°C. De la vapeur d'eau à une température de 100°C à la pression atmosphérique est alimentée dans la colonne, à un débit de 600 kg/h, correspondant à 1,5 % en poids de vapeur par rapport au poids de moût.

Le traitement se poursuit et le fond de la colonne se remplit progressivement avec le tampon de moût traité. Une pompe de sortie est mise en fonctionnement dont le débit est réglé de façon à ce que le niveau du tampon de moût traité reste constant, à une hauteur de 0,3 m.

L'efficacité du traitement d'élimination des composants volatils peut être vérifiée de la façon suivante.

La teneur en DMS (sulfure de diméthyle) du moût de bière à traiter est analysée par chromatographie en phase gazeuse avant le début du passage dans la colonne. Après passage dans la colonne, le moût sortant est analysé de la même façon et la teneur en DMS est comparée avec celle de départ.

L'analyse de l'échantillon montre que la teneur en DMS trouvée avant passage dans le dispositif selon l'invention est de 200 à 300 parties par billion (ppb). L'échantillon sortant de la colonne possède quant à lui une teneur en DMS de 30 à 45 ppb, correspondant à une élimination d'environ 85 % en poids des composants volatils.

Cette faible teneur permet alors d'obtenir un produitfinal dans lequel la teneur en DMS sera inférieure à la valeur de 50 ppb considérée comme la valeur acceptable dans l'industrie de la brasserie.

On vérifie en analysant la teneur en DMS des condensats recueillis que la quantité de DMS absente du moût sortant de la colonne correspond à celle trouvée dans les condensats montrant ainsi que le dispositif de l'invention est bien responsable de l'élimination des composants volatils.

Si ce rendement d'élimination du DMS de 85% environ paraît insuffisant en fonction de la proportion de DMS dans le moût à l'entrée de la colonne de stripage, il est facile de procéder, avant le passage dans la colonne de stripage, à une ébullition énergique du moût pendant quelques instants courts, par exemple de 5 à 10 minutes, pour abaisser la proportion de DMS à l'entrée de la colonne.

Il est par ailleurs possible d'augmenter très sensiblement, par exemple jusqu'à 90% ou 95% au moins, ce rendement d'élimination du DMS en augmentant de façon importante la hauteur et le diamètre de la colonne de stripage.

Il va de soi que la présente invention n'entend pas se limiter aux exemples de réalisation qui viennent d'être décrits.

## Revendications

1. Utilisation, pour la mise en oeuvre d'un procédé d'élimination des composants volatils non désirés contenus dans un moût de bière, sans évaporation notable, ce procédé comprenant une première étape d'ébullition du moût, à une température comprise entre environ 90°C et environ 150°C, suivie d'une seconde étape de séparation des composants volatils non désirés contenus dans ledit moût, d'un dispositif comprenant une colonne (1) de contact à contre-courant permettant un contact entre un courant ascendant de vapeur ou gaz inerte et un courant descendant de moût à une température voisine de la température d'ébullition dudit moût à la pression régnant dans la colonne (1), ladite colonne (1) contenant des corps de remplissage pour augmenter la surface de contact à l'intérieur de la colonne (1) entre le moût et le courant de vapeur ou gaz inerte,
**caractérisée en ce que** l'on utilise une colonne (1) comprenant :
- a) dans la partie supérieure de la colonne (1), des moyens (2) de passage et de distribution uniforme du moût de bière à l'intérieur de ladite colonne (1), constitués par des orifices (19) de passage du moût ménagés à travers une plaque de distribution (2) du moût et agencés de manière à répartir de façon régulière et uniforme le courant de moût de bière sur toute la surface transversale de la colonne (1), et des moyens de passage de la vapeur ou du gaz inerte à travers ladite plaque (2) séparés des moyens de passage du moût et constitués par une pluralité de cheminées (20) disposées sur la surface de ladite plaque de distribution (2), ces cheminées (20) possédant une hauteur suffisante pour empêcher le moût présent sur ladite plaque de distribution (2) de s'écouler par lesdites cheminées (20) lorsque la colonne (1) est en fonctionnement, la plaque de distribution (2) étant perpendiculaire à l'axe de la calonne (1);
- b dans la partie inférieure de la colonne (1), des moyens (8, 10) de passage et de distribution uniforme du courant de vapeur ou de gaz inerte à l'intérieur de la colonne (1), constitués par des orifices de passage de la vapeur ou du gaz inerte agencés de manière à répartir de façon régulière et uniforme le courant de vapeur ou de gaz inerte sur toute la surface transversale de la colonne (1) ;
- c) les moyens (8, 10) de passage du courant de vapeur ou de gaz inerte comprenant une laque de fond (8) perpendiculaire à l'axe de la colonne (1), supportant les corps de remplissage et percée d'orifices (21), la plaque (8) et les orifices (21) étant agencés de façon à présenter une surface totale de passage dudit courant de gaz inerte ou de vapeur égale à au moins 90% de la surface transversale de la colonne (1) ;
- d) les corps de remplissage étant des corps de remplissage de relativement grande dimension et donc de faible rapport surface d'échange par unité de volume, constitués par des anneaux de diamètre au moins égal à 3 à 4 cm, disposés de façon aléatoire sur la plaque de fond (8) et formant ainsi un réseau diffus de corps de remplissage entre la plaque de fond (8) et la plaque de distribution (2).

2. Utilisation selon la revendication 1, **caractérisée en ce que** la plaque de fond (8) comporte des ondulations sur au moins une partie de sa surface, les orifices (21) étant disposés sur sa surface.

3. Utilisation selon la revendication 1, **caractérisée en ce que** la plaque de fond (8) est un grillage ondulé.

4. Utilisation selon l'une quelconque des revendications précédentes, **caractérisée en ce que** les moyens de distribution uniforme (10) d'un courant de gaz inerte ou de vapeur comprennent une conduite principale (22) en communication avec des conduites secondaires (23), ces conduites étant disposées au niveau de la région d'évacuation du moût traité dans la partie inférieure de la colonne (1), et comportant une pluralité d'orifices (25) disposés de façon régulière sur la majeure partie de la conduite principale (22) et des conduites secondaires (23), de façon que le courant de gaz inerte ou de vapeur puisse être alimenté à l'intérieur de la colonne (1) sur pratiquement la totalité de la section de ladite colonne (1).

5. Utilisation selon la revendication 4, **caractérisée en ce que** les orifices (25) sont dirigés vers le fond de la colonne (1).

6. Utilisation selon l'une quelconque des revendications précédentes, **caractérisée en ce que** la colonne (1) comprend un moyen de recueil du moût traité, sans formation substantielle de mousse.

7. Utilisation selon la revendication 6, **caractérisée en ce que** le moyen de recueil du moût traité comprend au moins une surface inclinée (11), dirigée vers le fond de la colonne (1) et située au niveau de la partie inférieure de ladite colonne (1), ladite surface (11) étant munie d'un moyen formant versoir (11a) dirigé vers le fond de ladite colonne (1).

8. Utilisation selon l'une quelconque des revendications précédentes, **caractérisée en ce que** la colonne comprend de plus des moyens de nettoyage supplémentaires de l'intérieur de la colonne (1) localisés dans différentes régions de la colonne (1).

9. Utilisation selon la revendication 8, **caractérisée en ce que** les moyens de nettoyage comprennent plusieurs distributeurs d'un liquide de lavage ou de rinçage, localisés au niveau notamment des moyens de distribution (2) du moût, au niveau des corps de remplissage, au niveau des moyens de distribution (10) d'un courant de gaz inerte ou de vapeur, au niveau des moyens de recueil (11, 11a) du moût traité, lesdits distributeurs étant reliés à des moyens extérieurs de commande et de contrôle.

10. Utilisation selon l'une quelconque des revendications précédentes, **caractérisée en ce que** l'on injecte un débit de vapeur d'eau ou de gaz inerte représentant de 0,5% à 3% environ en poids du débit de moût.

11. Utilisation selon l'une quelconque des revendications précédentes, **caractérisée en ce que** la pression interne de la colonne est réglée en fonction de la température du moût entrant dans la colonne.

## Claims

1. Use, for the implementation of a process for removal of unwanted volatile components present in a beer wort, without significant evaporation, this process comprising a first stage of boiling the wort, at a temperature of between approximately 90°C and approximately 150°C, followed by a second stage of separation of unwanted volatile components present in the said wort, of a device comprising a countercurrent contact column (1) allowing contact between an upward stream of steam or inert gas and a downward stream of wort at a temperature in the region of the boiling temperature of the said wort at the pressure prevailing in the column (1), the said column (1) comprising packing elements for increasing the surface area for contact within the column (1) between the wort and the stream of steam or inert gas,
**characterized in that** use is made of a column (1) comprising:
- a) in the upper part of the column (1), means (2) for passage and uniform distribution of the beer wort within the said column (1), composed of orifices (19) for passage of the wort inserted through a distribution plate (2) for the wort and arranged so as to evenly and uniformly distribute the stream of beer wort over the entire transverse surface area of the column (1), and means for passage of the steam or inert gas through the said plate (2) separate from the means for passage of the wort and composed of a plurality of protruding pipes (20) positioned on the surface of the said distribution plate (2), these protruding pipes (20) having a height sufficient to prevent the wort present on the said distribution plate (2) from flowing through the said protruding pipes (20) when the column (1) is operating, the distribution plate (2) being perpendicular to the axis of the column (1);
- b) in the lower part of the column (1), means (8, 10) for passage and uniform distribution of the stream of steam or inert gas within the column (1), composed of orifices for passage of the steam or inert gas arranged so as to evenly and uniformly distribute the stream of steam or inert gas over the entire transverse surface area of the column (1);
- c) the means (8, 10) for passage of the stream of steam or inert gas comprising a bottom plate (8) perpendicular to the axis of the column (1) which supports the packing elements and is pierced by orifices (21), the plate (8) and the orifices (21) being arranged so as to exhibit a total surface area for passage of the said stream of inert gas or steam equal to at least 90% of the transverse surface area of the column (1);
- d) the packing elements being packing elements which are relatively large in size and thus with a low ratio of exchange surface area per unit of volume, composed of rings with a diameter at least equal to 3 to 4 cm, arranged haphazardly on the bottom plate (8) and thus forming a random network of packing elements between the bottom plate (8) and the distribution plate (2).

2. Use according to Claim 1, **characterized in that** the bottom plate (8) comprises corrugations over at least a portion of its surface, the orifices (21) being positioned on its surface.

3. Use according to Claim 1, **characterized in that** the bottom plate (8) is a corrugated grid.

4. Use according to any one of the preceding claims, **characterized in that** the means for uniform distribution (10) of a stream of inert gas or steam comprise a main pipe (22) in communication with branch pipes (23), these pipes being positioned in the region for discharge of the treated wort in the lower part of the column (1) and comprising a plurality of orifices (25) positioned evenly over most of the main pipe (22) and of the branch pipes (23), so that the stream of inert gas or steam can be fed within the column (1) over virtually the whole of the cross section of the said column (1).

5. Use according to Claim 4, **characterized in that** the orifices (25) are directed towards the bottom of the column (1).

6. Use according to any one of the preceding claims, **characterized in that** the column (1) comprises a means for collecting the treated wort, without substantial formation of foam.

7. Use according to Claim 6, **characterized in that** the means for collecting the treated wort comprises at least one inclined surface (11) directed towards the bottom of the column (1) and situated in the lower part of the said column (1), the said surface (11) being equipped with a means forming a diverter (11a) directed towards the bottom of the said column (1).

8. Use according to any one of the preceding claims, **characterized in that** the column furthermore comprises additional means for cleaning the inside of the column (1) located in various regions of the column (1).

9. Use according to Claim 8, **characterized in that** the cleaning means comprise several distributors of a washing or rinsing liquid, located in the means for distribution (2) of the wort in particular, in the packing elements, in the means for distribution (10) of a stream of inert gas or steam, in the means for collecting (11, 11a) the treated wort, the said distributors being connected to external control and monitoring means.

10. Use according to any one of the preceding claims, **characterized in that** a flow rate of steam or inert gas representing from 0.5% to 3% approximately by weight of the flow rate of wort is injected.

11. Use according to any one of the preceding claims, **characterized in that** the internal pressure in the column is adjusted according to the temperature of the wort entering the column.

## Patentansprüche

1. Verwendung zur Durchführung eines Verfahrens zur Entfernung unerwünschter flüchtiger Stoffe aus einer Bierwürze ohne merkliches Eindampfen, wobei dieses Verfahren einen ersten Schritt des Kochens der Bierwürze bei einer Temperatur zwischen ungefähr 90°C und ungefähr 150°C umfasst, gefolgt von einem zweiten Schritt des Abtrennens der unerwünschten, in der Bierwürze enthaltenen, leicht flüchtigen Stoffe, einer Vorrichtung mit einer Gegenstrom-Kontaktkolonne (1), welche einen Kontakt zwischen einem aufsteigenden Dampf- oder Inertgasstrom und einem abwärts fließenden Bierwürzestrom bei einer Temperatur nahe der Siedetemperatur der Bierwürze bei dem in der Kolonne (1) herrschenden Druck ermöglicht, wobei die Kolonne (1) Füllkörper enthält, um die Kontaktfläche im Inneren der Kolonne (1) zwischen der Bierwürze und dem Dampf- oder Inertgasstrom zu vergrößern,
**dadurch gekennzeichnet, dass** eine Kolonne (1) eingesetzt wird, die aufweist:
- a) in dem oberen Bereich der Kolonne (1) Vorrichtungen (2) zum Durchlauf und zur gleichmäßigen Verteilung der Bierwürze im Inneren der Kolonne (1), welche von Durchgangsöffnungen (19) für die Bierwürze gebildet sind, welche durch eine Verteilerplatte (2) für die Bierwürze hindurch ausgebildet und derart angeordnet sind, dass sie den Bierwürzestrom regelmäßig und gleichmäßig über die gesamte Querfläche der Kolonne (1) verteilen, und Vorrichtungen für den Durchgang des Dampfes oder des inertgases durch die Platte (2), welche von den Vorrichtungen für den Durchlauf der Bierwürze getrennt und von einer Vielzahl von Schächten (20) gebildet sind, die auf der Oberfläche der Verteilerplatte (2) angeordnet sind, wobei diese Schächte (20) eine ausreichende Höhe aufweisen, um zu verhindern, dass die auf der Verteilerplatte (2) vorhandene Bierwürze durch die Schächte (20) abläuft, wenn die Kolonne (1) in Betrieb ist, wobei die Verteilerplatte (2) senkrecht zu der Achse der Kolonne (1) liegt;
- b) in dem unteren Bereich der Kolonne (1) Vorrichtungen (8, 10) zum Durchgang und zur gleichmäßigen Verteilung des Dampf- oder Inertgasstromes im Inneren der Kolonne (1), welche von Durchgangsöffnungen für den Dampf oder das Inertgas gebildet sind, welche derart angeordnet sind, dass sie den Dampf- oder Inertgasstrom über die gesamte Querfläche der Kolonne (1) regelmäßig und gleichmäßig verteilen;
- c) wobei die Vorrichtungen (8, 10) zum Durchgang des Dampf- oder Inertgasstromes eine Bodenplatte (8) aufweisen, welche senkrecht zu der Achse der Kolonne (1) liegt, und welche die Füllkörper trägt und von Öffnungen (21) durchbohrt ist, wobei die Platte (8) und die Öffnungen (21) derart angeordnet sind, dass sie eine Gesamtfläche für den Durchgang des inertgas- oder Dampfstromes aufweisen, die wenigstens 90% der Querfläche der Kolonne (1) entspricht;
- d) wobei die Füllkörper aus Füllkörpern mit relativ großer Abmessung und so mit einem geringen Verhältnis der Austauschfläche pro Volumeneinheit bestehen, die von Ringen mit einem Durchmesser von wenigstens 3 bis 4 cm gebildet sind, welche in ungeordneter Form auf der Bodenplatte (8) angeordnet sind und so ein ungeordnetes Netzwerk aus Füllkörpern zwischen der Bodenplatte (8) und der Verteilerplatte (2) bilden.

2. Verwendung gemäß Anspruch 1, **dadurch gekennzeichnet, dass** die Bodenplatte (8) auf wenigstens einem Teil ihrer Oberfläche Wellen aufweist, wobei die Öffnungen (21) auf ihrer Oberfläche angeordnet sind.

3. Verwendung gemäß Anspruch 1, **dadurch gekennzeichnet, dass** die Bodenplatte (8) ein gewelltes Gitter ist.

4. Verwendung gemäß irgendeinem der vorherigen Ansprüche, **dadurch gekennzeichnet, dass** die Vorrichtungen zur gleichmäßigen Verteilung (10) eines Inertgas- oder Dampfstromes eine Hauptleitung (22) aufweisen, welche in Verbindung mit Nebenleitungen (23) steht, wobei diese Leitungen auf der Höhe des Abfließbereiches der behandelten Bierwürze in dem unteren Bereich der Kolonne (1) angeordnet sind, und sie eine Vielzahl von Öffnungen (25) aufweisen, die regelmäßig über den größten Teil der Hauptleitung (22) und der Nebenleitungen (23) derart angeordnet sind, dass der Inertgas- oder Dampfstrom dem Inneren der Kolonne (1) über praktisch die Gesamtheit des Querschnitts der Kolonne (1) zugeleitet werden kann.

5. Verwendung gemäß Anspruch 4, **dadurch gekennzeichnet, dass** die Öffnungen (25) zu dem Boden der Kolonne (1) hin gerichtet sind.

6. Verwendung gemäß irgendeinem der vorherigen Ansprüche, **dadurch gekennzeichnet, dass** die Kolonne (1) eine Vorrichtung zum Auffangen der behandelten Bierwürze ohne wesentliche Bildung von Schaum aufweist.

7. Verwendung gemäß Anspruch 6, **dadurch gekennzeichnet, dass** die Vorrichtung zum Auffangen der behandelten Bierwürze wenigstens eine geneigte Fläche (11) aufweist, welche zu dem Boden der Kolonne (1) hin gerichtet und auf der Höhe des unteren Bereiches der Kolonne (1) angeordnet ist, wobei die Fläche (11) mit einer zu dem Boden der Kolonne (1) hin gerichteten, ein Abstreichblech (11a) bildenden Vorrichtung ausgestattet ist.

8. Verwendung gemäß irgendeinem der vorherigen Ansprüche, **dadurch gekennzeichnet, dass** die Kolonne außerdem zusätzliche Vorrichtungen zum Reinigen des Inneren der Kolonne (1) aufweist, die in verschiedenen Bereichen der Kolonne (1) angeordnet sind.

9. Verwendung gemäß Anspruch 8, **dadurch gekennzeichnet, dass** die Reinigungsvorrichtungen mehrere Verteiler für eine Wasch- oder Spülflüssigkeit aufweisen, welche insbesondere auf der Höhe der Verteilungsvorrichtungen (2) für die Bierwürze, auf der Höhe der Füllkörper, auf der Höhe der Vorrichtungen zur Verteilung (10) eines Inertgas- oder Dampfstromes und auf der Höhe der Vorrichtungen zum Auffangen (11, 11a) der behandelten Bierwürze angeordnet sind, wobei die Verteiler mit äußeren Steuer- und Kontrollvorrichtungen verbunden sind.

10. Verwendung gemäß irgendeinem der vorherigen Ansprüche, **dadurch gekennzeichnet, dass** eine Wasserdampf- oder Inertgasdurchsatzmenge eingespritzt wird, welche ungefähr 0,5 Gew.-% bis 3 Gew.-% der Bierwürzedurchsatzmenge darstellt.

11. Verwendung gemäß irgendeinem der vorherigen Ansprüche, **dadurch gekennzeichnet, dass** der Innendruck in der Kolonne abhängig von der Temperatur der in die Kolonne einfließenden Bierwürze geregelt wird.
